# EUROPÄISCHE PATENTSCHRIFT

(11) **EP 0 471 892 B1**
(45) Veröffentlichungstag und Bekanntmachung des Hinweises auf die Patenterteilung: **18.10.1995**
(21) Anmeldenummer: 90124631.4
(22) Anmeldetag: 18.12.1990
(51) Int. Cl.: B29C 61/06

(54) **Verbundumhüllung aus mindestens einer wärmeschrumpfbaren Folie mit Verstärkung und Verfahren zu deren Herstellung**
Composite cover of at least one, reinforced, heat shrinkable film and method for its manufacture
Couverture composite comprenant au moins une feuille renforcée, thermo-rétractable, et son procédé de fabrication

(30) Priorität: 20.08.1990 DE 4026317
(43) Veröffentlichungstag der Anmeldung: 26.02.1992
(73) Patentinhaber: RXS Kabelgarnituren Gesellschaft mit beschränkter Haftung, D-58093 Hagen (DE)
(72) Erfinder: Affoldersbach Ulrich, Dipl.-Ing., W-5600 Wuppertal (DE); Meltsch, Hans-Jürgen, Dipl.-Ing., W-5840 Schwerte (DE)
(74) Vertreter: Fuchs, Franz-Josef, Dr.-Ing.

(56) Entgegenhaltungen:
- EP-A- 0 116 393
- EP-A- 0 117 026
- EP-A- 0 226 940
- DE-U- 8 806 965

## Beschreibung

Die Erfindung betrifft eine Verbundumhüllung aus mindestens einer wärmeschrumpfbaren Folie und unter Verwendung von Verstärkungen aus reißfesten Fasern.

Aus der EP-A2-0 115 905 ist ein wärmerückstellbarer Gegenstand bekannt, der aus einem schrumpfbaren Gewebe besteht, wobei die schrumpfbaren Fäden bzw. Fasern aus vernetzten Polymeren bestehen, die gereckt und somit wärmerückstellbar sind. Zusätzlich können auch hochfeste Fäden aus Polyester oder Glas eingelagert sein. Hier ist jedoch von Nachteil, daß die wärmerückstellbaren Fäden bzw. Fasern gerade bei Schrumpftemperatur eine äußerst geringe Zugfestigkeit aufweisen. Außerdem besteht die Gefahr, daß entlang der Fäden bzw. Fasern Hohlräume entstehen können, in die Feuchtigkeit eindringt.

Der vorliegenden Erfindung liegt nun die Aufgabe zugrunde, eine wärmeschrumpfbare Verbundumhüllung zu schaffen, bei der durch Einlagerung von entsprechenden Verstärkungen die mechanische Festigkeit gegenüber herkömmlichen Aufbauten erhöht wird, wobei die eingelagerten Verstärkungen auch gegen Eindringen von Feuchtigkeit entlang ihrer Oberflächen geschützt werden sollen. Die gestellte Aufgabe wird nun gemäß der Erfindung mit einer Verbundumhüllung der eingangs beschriebenen Art dadurch gelöst, daß etwa in Schrumpfrichtung verlaufend mehrere reißfeste Fasern vorgesehen sind, daß die reißfesten Fasern auf oder in einem der Folie zugeordneten Trägerelement angeordnet sind und daß das Trägerelement aus einem unterhalb oder zumindest bei der Reck- bzw. Schrumpftemperatur der schrumpfbaren Folie schmelzenden Material besteht, wobei das Trägerelement nach dem Recken bzw. Schrumpfen strukturlos mit den reißfesten Fasern zu einer Verstärkungslage verschmolzen ist.

Ein besonderer Vorteil der Erfindung liegt darin, daß die reißfesten Fasern in Schrumpfrichtung in einer entsprechenden Konfiguration eingebracht werden können, die ein Ausziehen beim Recken gestattet.

So kann z.B. in einfacher Weise eine Überlänge der reißfesten Fasern in der Verbundumhüllung eingebracht werden. Diese Verbundumhüllung besteht nun aus mindestens einer wärmeschrumpfbaren Folie auf der mehrere reißfeste Fasern etwa in Schrumpfrichtung verlaufen, wobei diese an den Rändern, die vorzugsweise als Verschlußelemente ausgebildet sind, fest verankert sein können. Die reißfesten Fasern sind zur Erzielung einer Überlänge zweckmäßig z.B. gewendelt oder gewellt angeordnet, also nicht geradlinig.

Besonders vorteilhaft ist es, die reißfesten Fasern z.B. auf einzelnen fadenförmigen Trägerelementen aufzuwendeln, so daß sich hieraus gegenüber der Länge des einzelnen Trägerelementes eine Überlänge ergibt. Das Trägerelement besteht gemäß der Erfindung aus einem bei der Reck- bzw./und Schrumpftemperatur der Folie (z.B. 120°-160° C für PE) schmelzendem Kunststoffmaterial (Schmelztemperatur z.B. zwischen 60-160° C), vorzugsweise aus einem nicht vernetzbarem Material, z.B. Polyamid oder anderen bei Erwärmung auf die Recktemperatur niederviskosen Materialien. Eine Erhöhung der Viskosität durch den Vernetzungsvorgang der wärmeschrumpfenden Folie ist für die mechanischen Eigenschaften u.U. von Vorteil. Bei entsprechender Erwärmung auf die angegebene Reck/Schrumpftemperatur führt dies nun dazu, daß das Trägerelement strukturlos schmilzt und in alle etwaigen Hohlräume entlang der eingelagerten reißfesten Fäden dichtend eindringt und dort verbleibt. Dabei sind in diesem Zustand die reißfesten Fasern gewissermaßen schwimmend eingelagert, so daß eine beinahe ungehinderte Reckung der Verbundumhüllung erfolgen kann. Dabei werden beim Recken der Verbundumhüllung die mit Überlänge, z.B. nichtgeradlinig (z.B. wendelartig) und schwimmend eingelagerten, reißfesten Fasern ausgezogen, ggf. bis zu ihrer vollen Länge, wobei die Wendelsteigung dem Reckgrad der Verbundumhüllung entsprechend angepaßt ist. Beim Schrumpfvorgang ist in umgekehrter Weise durch erneutes Schmelzen der bereits verschmolzenen Trägermasse wiederum eine beinahe ungehinderte Bewegung der reißfesten Fasern möglich, wobei durch das praktisch flüssige Trägermaterial eine Stauchung der reißfesten Fasern unter Rückbildung einer Überlänge ermöglicht ist. Das erneute Schmelzen des Trägermaterials hat auch zur Folge, daß die reißfesten Fasern nach dem Schrumpfen ebenfalls wieder besonders dicht umschlossen werden, so daß Feuchtigkeit nicht mehr eindringen kann. Im erkalteten Zustand ist nach dem Schrumpfen weiterhin gewährleistet, daß die reißfesten Fasern im Verbund (bestehend aus geschrumpfter Folie und Trägermaterial) unverrückbar eingebettet sind.

Die reißfesten Fasern bestehen vorteilhaft aus hochtemperaturbeständigem Material, vorzugsweise aus Glas, Keramik, Aramid, Karbon oder Kombinationen daraus.

Trägerelemente für die reißfesten Fasern bestehen zweckmäßig aus nicht vernetzbarem Kunststoffmaterial, vorzugsweise aus einem Polyamid oder aus sonstigen bei der Reck/Schrumpftemperatur der Folie besonders niederviskosen Werkstoffen, wobei jeweils der Schmelzpunkt dieser Materialien unterhalb oder höchstens bei der Reck- bzw./und Schrumpftemperatur (bei schrumpfbaren Folien aus PE etwa im Bereich zwischen 130° C und 160° C) liegen muß; für das vorstehende Zahlenbeispiel also in einem Bereich z.B. von etwa 60° C bis höchstens 160° C. Die Viskosität des Trägermaterials sollte bei der Reck- bzw. Schrumpftemperatur so gewählt sein, das das Material möglichst niederviskos, vorteilhaft zumindest zähflüssig ist. Zweckmäßig sind Werte unter 10⁶ m Pas.

Der Volumenanteil des schmelzbaren Trägerkörpers wird zweckmäßig größer gewählt als der Volumenanteil der reißfesten Fasern. Dieser Überschuß an schmelzbarem Material sichert eine gute Einlagerung der Fasen und eine gute Abdichtung.

Die Temperatur des Schmelzpunktes des Trägerkörpers sollte zur Sicherheit zweckmäßig um einige Grade unterhalb der Reck- bzw. Schrumpftemperatur liegen, vorzugsweise mindestens 10° C.

Auf ein solches Trägerelement, das im Grunde beliebigen Querschnitt aufweisen kann, können auch mehrere reißfeste Fasern aufgebracht werden, entweder parallel verlaufend oder auch sich kreuzend. Es ist auch möglich, die reißfesten Fasern in das beim Recken/Schrumpfen niederviskose Trägermaterial einzubetten. Es sind auch kombinierte Strukturgebilde denkbar, wie z.B. eine Art Gewebestrumpf oder ähnliche Formationen.

Die reißfesten Fasern können ggf. auch zusätzlich zumindest teilweise reckbar sein, so daß hier eine beim Reckvorgang erzeugte Reckrate beim Schrumpfen mit ausgenützt werden kann.

Außer diesen im wesentlichen in Schrumpfrichtung verlaufenden reißfesten Fasern können auch weitere reißfeste Zusatzfasern eingelagert werden, die im wesentlichen senkrecht zur Schrumpfrichtung eingelagert werden. Diese Zusatzfasern können somit direkt und ohne Zusatzlängen eingelagert werden. So kann beispielsweise auch eine gewebe- oder gitterartige Struktur aus reißfesten Fasern hergestellt werden. Die einzelnen Trägereleelemente brauchen nur in der Schrumpfrichtung angeordnet werden. Für die Herstellung einer Verbundumhüllung einer Kabelmuffe kann es von Vorteil sein, wenn eine derartige Verstärkung auf oder in einer Trägerfolie oder zwischen zwei Trägerfolien angeordnet wird, so daß sie als gesamtes Element mit der schrumpfbaren Folie verbunden werden kann. Die Verbindung dieser reißfesten Elemente mit der schrumpfbaren Folie wird entweder durch Koextrusion oder durch Laminieren vorgenommen. Weiterhin kann die Verstärkung auch zwischen zwei schrumpfbaren Folien angeordnet werden, wobei besonders vorteilhaft ist, wenn die beiden Folien durch gegenseitige Materialdurchgriffe durch die Verstärkung hindurch miteinander zumindest punktweise zusätzlich verbunden werden.

Entlang der Längsränder sind vorzugsweise Längsverschlüsse angeformt, mit deren Hilfe der Verschluß nach Umhüllung eines Gegenstandes, z.B. eines Kabels erfolgt. Dabei ist zweckmäßig, wenn die äußere schrumpfbare Folie an den seitlichen Kanten übersteht, so daß diese Folie nach dem Schrumpfen auf dem umhüllten Gegenstand aufliegt, wobei zugleich durch Verschmelzen des Trägerelementes eine zusätzliche Abdichtung zum eingeführten Gegenstand erfolgen kann. Im allgemeinen ist die Innenseite dieser Verbundumhüllung mit einer Schicht aus Schmelzkleber versehen.

Die in Schrumpfrichtung im geschmolzenen Trägerelement liegenden reißfesten Fasern werden zweckmäßigerweise im Bereich ihrer äußeren Enden, also z.B. bei den Verschlußelementen fixiert, z.B. mit Hilfe einer längsverlaufenden Einlage, so daß sie beim Reck- bzw. Schrumpfvorgang nicht abwandern können.

Die Erfindung betrifft weiterhin ein Verfahren zur Herstellung einer Verbundumhüllung, welches dadurch gekennzeichnet ist, daß die Verbundumhüllung, bestehend mindestens aus der später schrumpfbaren Folie und den auf oder in den Trägerelementen angeordneten reißfesten Fasern auf eine zum Reckvorgang benötigte Temperatur, erwärmt wird, daß dann in diesem Zustand die Reckung der schrumpfbaren Folie und der reißfesten Fasern erfolgt und daß die Verbundumhüllung in diesem Reckzustand anschließend bis zur Abkühlung auf die Fixiertemperatur für das Formgedächtnis gehalten wird.

Eine weitere Möglichkeit zur Herstellung besteht darin, daß die bereits durch Laminieren aus der vernetzten Folie mit der Verstärkungslage hergestellte Verbundumhüllung auf Recktemperatur gebracht wird, wobei diese Temperatur bis zur Verschmelzung der Trägerelemente gehalten wird, daß dann die Reckung erfolgt, wobei die Verbundumhüllung im Reckzustand bis zur Abkühlung auf die Fixiertemperatur für das Formgedächtnis gehalten wird.

Die Herstellung kann auch so erfolgen, daß die Verstärkungslage bestehend aus den Trägerelementen un den reißfesten Fäden und gegebenenfalls den längs verlaufenden, blanken, reißfesten Fasern nach dem Reckvorgang auf die schrumpfende Folie, vorzugsweise durch Laminieren, aufgebracht wird und daß die Schrumpftemperatur so gewählt ist, daß die Trägerelemente strukturlos im Verbund verschmelzbar sind.

Wenn die Verstärkung beim Reckvorgang zur Herstellung des Schrumpfgedächtnisses für die schrumpfbare Folie aufgebracht wird, so ist die Temperatur bei der dies erfolgen soll, so zu wählen, daß die Trägerelemente schmelzen, so daß die reißfesten Fasern frei beweglich gestreckt werden können. Anschließend erfolgt die Abkühlung im gerektem Zustand bis auf die Fixiertemperatur des Formgedächtnisses.

Eine andere Möglichkeit ist, daß die Verstärkung bereits durch Koextrusion aufgebracht wird. Dann ist in gleicher Weise vorzugehen.

Das Zusammenbringen der einzelnen Verbundschichten kann auch erst nach dem Vernetzen der später schrumpfbaren Folie erfolgen, wobei dann für die Reckung ebenfalls die Bedingungen bezüglich des Verschmelzens der Trägerelemente gilt, da bereits hier die freie Beweglichkeit der reißfesten Fasern gegeben sein muß.

Wird hingegen das Verbinden der einzelnen Elemente erst nach dem Vernetzen und Recken der nun schrumpfbaren Folie vorgenommen, so muß die Schrumpftemperatur so gewählt sein, daß eine völlige Aufschmelzung der Trägerelemente während des Schrumpfvorganges erfolgen kann, um die freie Beweglichkeit der reißfesten Fasern ohne Behinderung des Schrumpfvorganges gewährleisten zu können.

Die Erfindung wird nun anhand von Zeichnungen näher erläutert.
- Fig. 1: zeigt ein Trägerelement mit einer Bewicklung aus einer zugfesten Faser.
- Fig. 2: zeigt ein Trägerelement mit zwei aufgebrachten reißfesten Fasern.
- Fig. 3: zeigt eine Verbundfolie aus einer schrumpfbaren Folie und einer Verstärkungsschicht.
- Fig. 4: zeigt eine Verbundfolie mit einer ersten schrumpfbaren Folie, einer Verstärkungsschicht und einer weiteren, vorzugsweise schrumpfbaren Folie.
- Fig. 5: zeigt eine aufgeschrumpfte Verbundumhüllung gemäß der Erfindung.
- Fig. 6: zeigt den Aufbau einer Kabelmuffe.
- Fig. 7: zeigt Einzelheiten eines verbesserten Aufbaus der Anordnung nach Fig. 6 im Bereich der Verschlußelemente.
- Fig. 8: zeigt die Anordnung von zusätzlichen Faserelementen bei nur einer Schrumpfrichtung.
- Fig. 9: zeigt die Anordnung von Faserelementen bei zwei Schrumpfrichtungen.
- Fig. 10: zeigt eine Abwandlung der Struktur nach Fig. 9.
- Fig. 11: zeigt eine gemischte Struktur aus den Fig. 9 und 10.
- Fig. 12: zeigt die Anordnung der reißfesten Fäden mit Überlänge in einem durchgehenden Trägerkörper.
- Fig. 13: zeigt eine andere Möglichkeit der Ausbildung der Überlänge der reißfesten Fäden als Fig. 12.
- Fig. 14: zeigt die Anordnung reißfester Faserstücke innerhalb eines durchgehenden Trägerkörpers.
- Fig. 15: zeigt den Aufbau einer Verbundfolie mit Dampfsperre

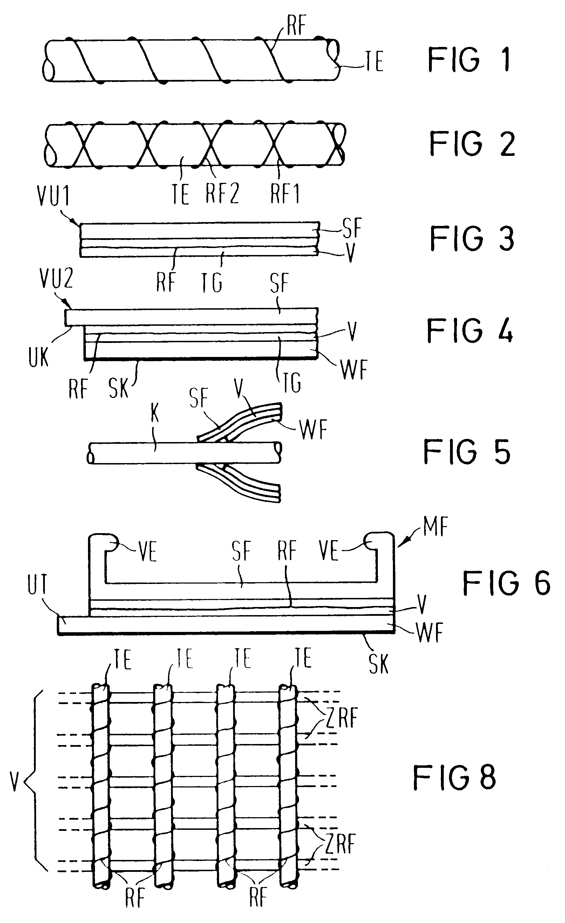

In Fig. 1 ist erkenntlich, daß ein Einzelelement der späteren Verstärkungslage V nach Fig. 3 aus einem fadenförmigen Trägerelement TE besteht, auf dem ein reißfestes Element RF aufgewendelt ist. Wie bereits beschrieben ist die Wendelsteigung der entsprechenden Reckungsrate anzugleichen. Bei Erreichen der Schmelztemperatur des Trägerelementes TE schmilzt dieses zu einer formlosen, strukturlosen Masse, in der die reißfeste Faser RF ohne Behinderung längs ausgezogen werden kann. Dieser Vorgang erfolgt beim Recken.

Die Fig. 2 zeigt wiederum ein Trägerelement TE aus einer Verstärkungsschicht V nach Fig. 3. Dabei ist angedeutet, daß auch mehrere reißfeste Fasern RF1 und RF2 aufgewendelt werden können, wobei sich hier die reißfesten Fasern kreuzen.

Fig. 3 zeigt eine Verbundumhüllung VU1, die aus einer vernetzten, schrumpfbaren Folie SF besteht, die auf einer Seite mit einer Verstärkungslage V belegt ist. Diese Verstärkungslage V enthält viele parallel verlaufende Verstärkungselementen RF, wie sie beispielsweise in Fig. 1 und 2 gezeigt sind. Diese Verstärkungselemente samt ihren Trägerelementen TE werden auf die Folie SF aufgebracht und diese wird anschließend erhitzt und dabei gereckt. Dadurch kommt es zu einem Schmelzen der Trägerelemente TE, die dann parallel zueinander verlaufend auf der Folie SF aufgelegt sind. Die Schmelztemperatur der Trägerelemente TE liegt unterhalb oder höchstens bei der Recktemperatur der vernetzten Folie SF. Die Trägerelemente TE verfließen dabei zweckmäßig zu einer geschlossenen Schicht TG, in die die reißfesten Fasern RF eingebettet sind und zwar etwa im gestreckten Zustand.

Innerhalb der Verstärkungslage wird der Volumenanteil der schmelzbaren Trägerelemente TE zweckmäßig entsprechend größer gewählt als der Volumenanteil der reißfesten Fasern RF. Vorteilhaft soll der Volumenanteil der Trägerelemente so gewählt sein, daß es zu einer "schwimmenden" allseitigen Einbettung der reißfesten Fasern RF im gereckten Zustand kommt, d.h. diese sind allseits vom (geschmolzenen) Material TG der (früheren) Trägerelemente TE umgeben. Vorteilhaft sollte der Volumenanteil des Materials TG der Trägerelemente bzw. der Schicht TG mindestens das 2- bis 100-fache des Volumens der reißfesten Fasern RF betragen; zweckmäßig sind Werte etwa zwischen dem 4-fachen und dem 20-fachen. Das Material TG der geschmolzenen Trägerelemente TE nach Fig. 1 und Fig. 2 bildet in Fig. 3 eine durchgehende Schicht.

Als Material für die Trägerelemente TE sind insbesondere Amide, vorzugsweise Polyamide geeignet. Auch thermoplastische Polyester, Ethylen-Propylen-Dien-Elastomere (EPDM) können verwendet werden. Von besonderem Vorteil ist der Einsatz sogenannter Schmelzkleber für die Trägerelemente TE, weil dann eine besonders gute Haftung der Verstärkungslage V an der schrumpfenden Folie SF gewährleistet ist. Außerdem tritt dabei eine gute Benetzung oder Bedeckung der reißfesten Fäden RF auf, so daß keine Hohlräume gebildet werden und z.B. eine ausreichende Längswasserdichtigkeit oder Druckdichtigkeit gewährleistet ist.

Fig. 4 zeigt ein Beispiel einer ebenfalls bereits gereckten Verbundumhüllung VU2, die aus einer äußeren schrumpfbaren Folie SF, einer darunter liegenden Verstärkungslage V und einer weiteren Folie WF aus thermoplastischem Material besteht. Die Verstärkungsfäden RF liegen im gereckten Zustand (im wesentlichen geradlinig verlaufend) vor. Die weitere Folie WF kann vorzugsweise ebenfalls aus schrumpfbaren Material bestehen. Auf diese Weise läßt sich eine Erhöhung der Schrumpfkräfte durch das Zusammenwirken der äußeren schrumpfenden Folie SF und der inneren schrumpfenden Folie WF erreichen. Die Schichten SF und WF können auch aus unterschiedlich vernetzbaren Kunststoffen bestehen. Weiterhin hat diese Anordnung den Vorteil, daß das geschmolzene Material TG der früheren Trägerelemente TE nicht nach innen abtropfen kann, sondern in einer geschlossenen Schicht beidseitig zusammengehalten wird.

Auf der Innenseite, also auf der Unterseite der weiteren Folie WF kann eine Schmelzkleberschicht SK angebracht sein, die z.B. ein Festkleben auf einer Unterlage bewirkt, wenn die Verbundumhüllung, z.B. auf einer Unterlage (einem Rohr oder dergleichen) aufgebracht wird.

Es ist zweckmäßig, wenn die äußere schrumpfbare Folie SF an der seitlichen Kante UK überstehend ausgebildet ist.

Die Fig. 5 zeigt die überstehende Kante UK der äußeren Schrumpffolien SF nach dem Aufchrumpfen der Verbundumhüllung VU2 nach Fig. 4 auf eine Unterlage, z.B. in Form eines Kabels K. Daraus ist ersichtlich, daß nach dem Schrumpfen die äußere Folie SF auf dem Kabel K wie eine Manschette eng aufliegt. Bei der Schrumpftemperatur wird die Verstärkungslage V ebenfalls wiederum flüssig und dichtet somit den Zwischenraum zwischen den Folien SF und WF vollständig ab. Infolge der Schrumpfkräfte wird das geschmolzenen Material TG der Verstärkungslage V somit auf die Außenwand des Kabels K aufgepreßt und damit eine besonders sichere Abdichtung erreicht. Die Schrumpfmuffe umhüllt einen nicht näher dargestellten Kabelspleiß.

Es ist aber auch möglich, die jeweilige Verbundumhüllung VU2 an ihren Rändern zu verschließen, also die Lagen WF und SF miteinander dicht zu verbinden, so daß ein Austreten des geschmolzenen Materials der Trägerelemente TE verhindert wird.

In Fig. 6 ist eine Ausführungsform gezeigt, wie die Verbundumhüllung als Muffe MF, insbesondere Kabelmuffe ausgebildet werden kann. Diese besteht ebenfalls aus einer äußeren Schrumpffolie SF, der Verstärkungslage V und der weiteren Folie WF. Diese ist an der Unterseite mit dem Schmelzkleber SK beschichtet. Die Muffe MF weist außerdem einen Übertritt UT auf, durch den im zusammengerollten Zustand der Spalt zwischen seitlich angeforderten Verschlußelementen VE überdeckt werden kann. Die Verschlußelemente VE werden durch eine z.B. längs verlaufende Verschlußschiene in bekannter Weise zusammengepreßt. Die angeformten Verschlußelemente VE sind bei Schrumpftemperatur formfest, so daß sich u.U. mit Hilfe einer dichtenden Längseinlage eine sichere Abdichtung erreichen läßt.

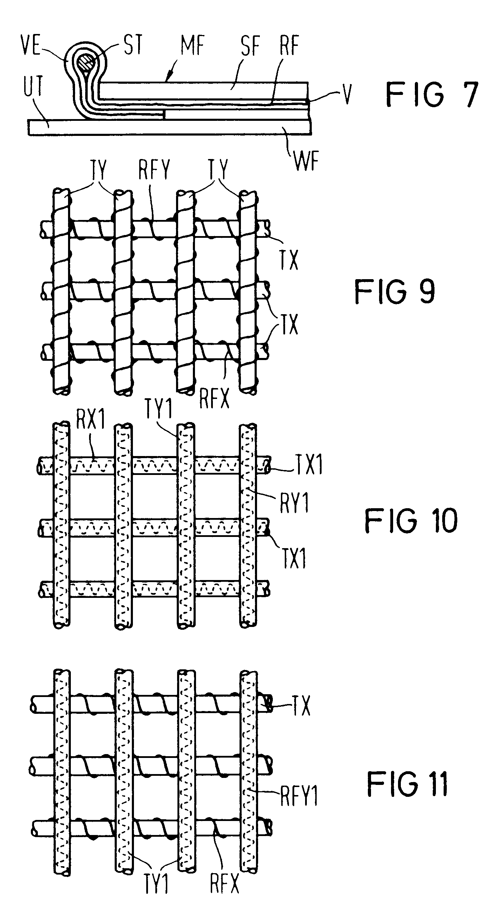

In Fig. 7 ist dargestellt, wie eine besonders zugfeste Schrumpfmuffe MF hergestellt werden kann. Hierbei ist die Verstärkungslage V an beiden Seiten um das jeweilige Verschlußelement VE schlaufenförmig herumgeschlungen, so daß ein "Durchziehen" der reißfesten Fäden RF beim Recken der Verbundumhüllung nicht erfolgen kann. Dabei ist es zweckmäßig im Bereich der Verschlußelemente VE noch einen Verstärkungsstab ST vorzusehen, der sich in Längsrichtung erstreckt und um den die Verstärkungslage V und damit auch die reißfesten Fasern RF herumgeschlungen und wieder bis in den Bereich der Folien SF und WF zurückgeführt werden.

In Fig. 8 ist dargestellt, wie neben den auf die Trägerelemente TE aufgewickelten reißfesten Fäden RF (analog Fig. 1 und 2) zusätzliche Verstärkungselemente ZRF vorgesehen sein können, die dann quer zur Schrumpfrichtung verlaufen. Diese reißfesten Zusatzfasern ZRF verlaufen in einer Richtung quer zu den reißfesten Fäden RF. Im vorliegenden Beispiel ist angenommen, daß eine Schrumpfung nur in Richtung der Trägerelemente TE erfolgen soll, nicht dagegen quer dazu. Deswegen können die reißfesten Zusatzfasern ZRF von Anfang im wesentlichen geradlinig verlaufen, weil beim Reckvorgang nur eine Dehnung in Richtung der Längsachsen der Trägerelemente TE erfolgt, nicht aber in Richtung der Längsachsen der Zusatzfasern ZRF.

In Fig. 9 ist ein Aufbau gezeichnet, bei der neben den Trägerelementen TY (analog TE Fig. 8) weitere quer dazu verlaufende Trägerelemente TX vorgesehen sind. Eine derartige Struktur für die Verstärkungslage V bietet die Möglichkeit, eine Reckung und damit eine Schrumpfung in zwei zueinander senkrechten Richtungen, nämlich längs der Achsen von TY und von TX durchzuführen. In beiden Fällen werden beim Reckvorgang sowohl die gewendelten reißfesten Fäden RY in Richtung der Trägerelemente TY als auch die reißfesten Fäden RX in Richtung der Trägerelemente TX im wesentlichen in eine gestreckte Form ausgezogen.

Fig. 10 zeigt ebenfalls eine Struktur der Verstärkungslage, die in zwei Richtungen schrumpfen kann. Dabei sind Trägerelemente TY1 in der einer Richtung und TX1 in der dazu senkrechten Richtung vorgesehen, wobei das Material der Trägerelemente die jeweiligen reißfesten Fasern RY1 und RX1 allseitig umschließt. D.h. diese Fasern, welche ebenfalls wendelförmig verlaufen, sind in das Innere des Materials der Trägerkörper TY1 und TX1 eingebettet.

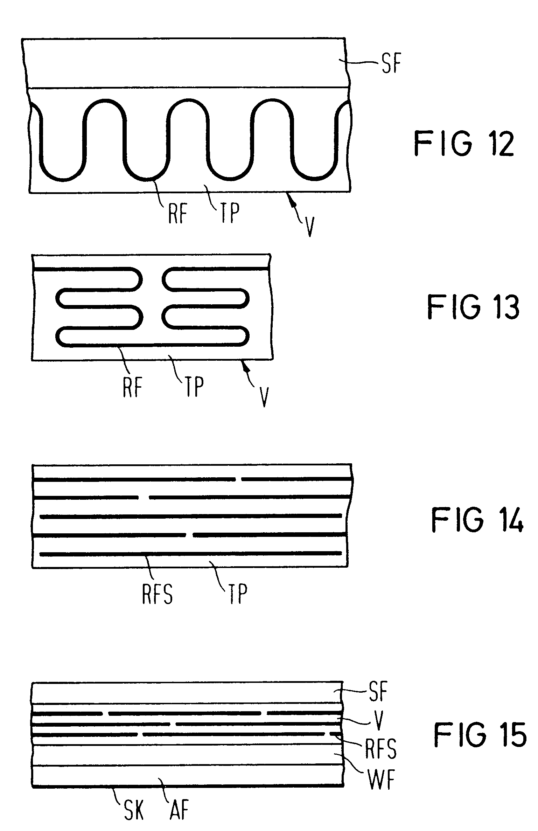

Fig. 11 zeigt eine Anordnung, bei der die Verbundlage aus gemischten Trägerelementen besteht, wobei die Trägerelemente TX den Aufbau nach Fig. 9 und die Trägerelemente TY1 den Aufbau nach Fig. 10 aufweisen.

Bei der Ausführungsform nach Fig. 12 ist das Trägerelement bereits vor dem Reckvorgang in Form einer Platte oder Folie TP ausgebildet, welche sich über eine größere Länge erstreckt und mit der Folie SF und ggf. WF (analog zu Fig. 3 und 4) verbunden ist. Dies ist besonders dadurch erleichtert, daß das Material des Trägerkörpers TP aus leicht schmelzbarem Substanzen besteht, wobei insbesondere der Einsatz von Schmelzklebern zweckmäßig ist. Innerhalb des Trägerkörpers TP verlaufen die reißfesten Fäden in einer die Überlänge ergebenden Form; im vorliegenden Beispiel in Form einer Mäanderlinie. Es ist aber auch möglich, die verschiedenen reißfesten Fäden in Form von Wendeln verlaufen zu lassen, also analog etwa zu dem Ausführungsbeispiel nach Fig. 1.

Fig. 13 zeigt eine weitere Ausführungsform ebenfalls unter Verwendung eines platten- oder folienförmigen Trägerelementes bzw. Trägerkörpers TP. Hier sind die reißfesten Fäden RF innerhalb der Dicke der Trägerplatte TP in mehreren Lagen übereinander schleifenförmig verlaufend ausgebildet, wobei entsprechend viele Strukturen analog Fig. 13 innerhalb der Trägerplatte TP rechts und links aneinandergereit zu denken sind. Beim Reckprozeß strecken sich die reißfesten Fäden RF nach Fig. 12 und 13 in eine etwa gerade Lage, was wegen des praktisch flüssigen Zustandes des Materials des Trägerkörpers TP ohne weiteres möglich ist. Ebenso kommt es beim Schrumpfen zu einer erneuten Verdickung des dann ebenfalls geschmolzenen Trägerkörpers TP, so daß wiederum Platz entsteht für einen etwa gewendelten oder sonst in irgendeiner Form gewundenen oder geschlungenen Verlauf der reißfesten Fäden RF. Es erfolgt also eine Rückbildung aus dem gestreckten Zustand in eine gewellte, gewendelte oder eine sonstige Struktur, welche die Überlänge wieder aufnimmt.

Fig. 14 zeigt ein Ausführungsbeispiel eines ebenfalls folien- oder plattenförmigen (ungereckten) Trägerkörpers TP (analog Fig. 12 und 13), in den einzelne reißfeste Fadenstücke RFS eingebettet sind. Diese reißfesten Fadenstücke RFS reichen nicht über die volle Länge des Verbundelementes, sondern nur über einen Teilbereich, so daß im allgemeinen auf eine gewendelte, gewellte oder sonstige eine Überlänge ergebende Struktur verzichtet werden kann. Die reißfesten Fadenstücke RFS gleiten beim Reckprozeß aneinander vorbei und erhöhen dadurch ihren Abstand, während sie beim Schrumpfen sich wiederum gegenseitig ineinander schieben. Es ist lediglich darauf zu achten, daß ausreichend viele reißfeste Fadenstücke RFS übereinander zu liegen kommen, so daß insgesamt eine auch im gereckten Zustand noch geschlossene Lage von Faserstücken vorhanden bleibt, und daß keine durchgehenden Trennstellen entstehen. Die Längsachsen der Faserstücke FS verlaufen im wesentlichen in Reck- bzw. Schrumpfrichtung.

Auch bei den Ausführungsformen nach Fig. 12-14 sind die Volumenanteile des Trägerkörpers TP zweckmäßig jeweils größer als die der reißfesten Fäden RF bzw. RFS.

Fig. 15 zeigt ein Ausführungsbeispiel eines Verbundkörpers, der ähnlich der Ausführungsform nach Fig. 4 aufgebaut ist und bevorzugt als Kabelmuffe verwendet werden kann. Neben der Schrumpffolie SF, der anschließenden Verstärkungslage V mit z.B. eingelegten reißfesten Fadenstücken RFS analog Fig. 14 und der weiteren Folie WF, die ebenfalls schrumpfbar sein kann, ist anschließend auf die weitere Folie WF eine Metallfolie AF, insbesondere Alufolie, als Wasserdampfsperre aufgebracht. Diese ist an ihrer Unterseite mit einer dünnen Schmelzkleberlage SK beschichtet.

## Patentansprüche

1. Verbundumhüllung aus mindestens einer wärmeschrumpfbaren Folie (SF) und unter Verwendung von Verstärkungen aus reißfesten Fasern,
**dadurch gekennzeichnet**,
daß etwa in Schrumpfrichtung verlaufend mehrere reißfeste Fasern (RF) vorgesehen sind, daß die reißfesten Fasern (FR) auf oder in einem der Folie (SF) zugeordneten Trägerelement (TE, TP) angeordnet sind und daß das Trägerelement (TE, TP) aus einem unterhalb oder zumindest bei der Reck- bzw. Schrumpftemperatur der schrumpfbaren Folie (SF) schmelzenden Material besteht, wobei das Trägerelement (TE, TP) nach dem Recken bzw. Schrumpfen strukturlos mit den reißfesten Fasern (RF) zu einer Verstärkungslage (V) verschmolzen ist.

2. Verbundumhüllung nach Anspruch 1,
**dadurch gekennzeichnet**,
daß die reißfeste Fasern (RF) aus hochtemperaturbeständigem Material bestehen, vorzugsweise aus Glas, Keramik, Aramid, Karbonmaterial sowie Kombinationen hieraus.

3. Verbundumhüllung nach einem der vorhergehenden Ansprüche,
**dadurch gekennzeichnet**,
daß das Trägerelement (TE, TP) aus nicht vernetzbarem Kunststoffmaterial besteht, vorzugsweise aus einem Polyamid.

4. Verbundumhüllung nach einem der vorhergehenden Ansprüche,
**dadurch gekennzeichnet**,
daß der Schmelzpunkt des Materials des Trägerelementes (TE, TP) in einem Bereich von 60° bis 160° C, vorzugsweise bei etwa 100° C liegt.

5. Verbundumhüllung nach Anspruch 4,
**dadurch gekennzeichnet**,
daß der Schmelzpunkt des Materials des Trägerelementes (TE, TP) mindestens um 10° C unter der Recktemperatur der Folie (SF) liegt.

6. Verbundumhüllung nach einem der vorhergehenden Ansprüche,
**dadurch gekennzeichnet**,
daß das Material des Trägerelementes (TE, TP) bei der Recktemperatur der Folie (SF) möglichst niederviskos ist, vorzugsweise unter 10⁶ mPas liegt.

7. Verbundumhüllung nach einem der vorhergehenden Ansprüche,
**dadurch gekennzeichnet,**
daß der Volumenanteil des Trägerelementes (TE, TP) größer gewählt ist als der Volumenanteil der reißfesten Fasern (RF).

8. Verbundumhüllung nach Anspruch 7,
**dadurch gekennzeichnet**,
daß der Volumenanteil des Trägerelementes (TE, T?) das 2-bis 100-fache, vorzugsweise das 4-bis 20-fache der reißfesten Fasern (RF) beträgt.

9. Verbundumhüllung nach einem der vorhergehenden Ansprüche,
**dadurch gekennzeichnet**,
daß das Trägerelementes (TE, TP) aus einem Schmelzkleber besteht.

10. Verbundumhüllung nach einem der vorhergehenden Ansprüche,
**dadurch gekennzeichnet**,
daß mindestens eine reißfeste Faser (RF) auf jeweils einem fadenförmigen Trägerelement (TE) aufgebracht ist und mehrere Trägerelemente (TE) zusammen eine Verstärkungslage (V) bilden.

11. Verbundumhüllung nach Anspruch 10,
**dadurch gekennzeichnet,**
daß mehrere reißfeste Fasern (RF1, RF2) sich kreuzend auf dem Trägerelement (TE) aufgebracht sind.

12. Verbundumhüllung nach Anspruch 10 oder 11,
**dadurch gekennzeichnet**,
daß die reißfesten Fasern (RF) als Gewebestrumpf auf ein Trägerelement (TE) aufgebracht sind.

13. Verbundumhüllung nach einem der vorhergehenden Ansprüche,
**dadurch gekennzeichnet,**
daß die reißfesten Fasern (RF) zumindest teilweise reckbar sind.

14. Verbundumhüllung nach einem der vorhergehenden Ansprüche,
**dadurch gekennzeichnet**,
daß die Trägerelemente (TE, TP) samt den reißfesten Fasern (RF)
auf oder in einer Trägerfolie (SF) angeordnet sind.

15. Verbundumhüllung nach einem der vorhergehenden Ansprüche,
**dadurch gekennzeichnet**,
daß die schrumpfbare Folie (SF) aus vernetztem oder vernetzbarem Kunststoffmaterial, vorzugsweise aus Polyäthylen besteht.

16. Verbundumhüllung nach einem der vorhergehenden Ansprüche,
**dadurch gekennzeichnet**,
daß die schrumpfbare Folie (SF) entlang der Längsränder mit Verschlußprofilen (VE) versehen ist.

17. Verbundumhüllung nach einem der vorhergehenden Ansprüche,
**dadurch gekennzeichnet**,
daß die Verbindung von schrumpfbarer Folie (SF) und der Verstärkungslage (V) durch Koextrusion erfolgt ist.

18. Verbundumhüllung nach einem der Ansprüche 1 bis 16,
**dadurch gekennzeichnet,**
daß die Verbindung von schrumpfbarer Folie (SF) und der Verstärkung (V) durch Laminieren erfolgt ist.

19. Verbundumhüllung nach einem der vorhergehenden Ansprüche,
**dadurch gekennzeichnet,**
daß die reißfesten Fasern (RF) im Randbereich, insbesondere im Bereich von Verschlußprofilen, verankert sind (Fig. 7).

20. Verbundumhüllung nach einem der vorhergehenden Ansprüche,
**dadurch gekennzeichnet**,
daß zusätzlich reißfeste Fasern (ZRF) senkrecht zur Schrumpfrichtung vorgesehen sind.

21. Verbundumhüllung nach Anspruch 20,
**dadurch gekennzeichnet,**
daß die reißfesten Fäden (RF) mit den in Längsrichtung verlaufenden Fasern (ZRF) ein Gewebe, ein Gelege, eine Matte, oder ein Gitter bilden.

22. Verbundumhüllung nach einem der vorhergehenden Ansprüche,
**dadurch gekennzeichnet,**
daß die schrumpfbare Folie (SF) an den in Schrumpfrichtung verlaufenden Kanten (UK) über die Verstärkungen (V) übersteht.

23. Verbundumhüllung nach einem der vorhergehenden Ansprüche,
**dadurch gekennzeichnet,**
daß auf der nach innen weisenden Seite der Verbundumhüllung, bestehend aus der schrumpfbaren Folie (SF) und der Verstärkungslage (V) eine weitere, vorzugsweise schrumpfbare Folie (WF) angeordnet ist.

24. Verbundumhüllung nach Anspruch 23,
**dadurch gekennzeichnet**,
daß die Verbindung der beiden schrumpfbaren Folien (SF, WF) durch gegenseitigen Materialdurchgriff, vorzugsweise über die Verstärkungslage (V) hinweg erfolgt.

25. Verbundumhüllung nach einem der vorhergehenden Ansprüche,
**dadurch gekennzeichnet**,
daß auf der Innenseite der Verbundumhüllung (VU2) eine Schicht aus Schmelzkleber (SK) angeordnet ist.

26. Verbundumhüllung nach Anspruch 1 bis 9 oder 13 bis 25,
**dadurch gekennzeichnet**,
daß das Trägerelement als durchgehende Platte oder Folie (TP) ausgebildet ist, worin die reißfesten Fasern (RF) eingebettet sind.

27. Verbundumhüllung nach Anspruch 26,
**dadurch gekennzeichnet**,
daß die reißfesten Fasern (RF)vor dem Recken nicht geradlinig verlaufend angeordnet sind (Fig. 12, 13).

28. Verbundumhüllung nach Anspruch 26,
**dadurch gekennzeichnet**,
daß die reißfesten Fasern als kurze, nicht über die volle Breite der Verbundumhüllung reichende Faserstücke (RFS) ausgebildet sind (Fig. 14).

29. Verbundumhüllung nach einem der vorhergehenden Ansprüche,
**dadurch gekennzeichnet**,
daß die reißfesten Fasern (RF) im nicht gereckten Zustand eine Überlänge aufweisen.

30. Verbundumhüllung nach einem der vorhergehenden Ansprüche,
**gekennzeichnet durch**
die Ausbildung als Kabelmuffe.

31. Verfahren zur Herstellung einer Verbundumhüllung nach einem der vorhergehenden Ansprüche,
**dadurch gekennzeichnet,**
daß die Verbundumhüllung, bestehend mindestens aus der später schrumpfbaren Folie (SF) und den auf oder in den Trägerelementen (TE, TP) in Überlänge angeordneten reißfesten Fasern (RF), auf eine zum Reckvorgang benötigte Temperatur erwärmt wird, daß dann in diesem Zustand die Reckung erfolgt und daß die Verbundumhüllung (VU1, VU2) in diesem Reckzustand anschließend bis zur Abkühlung auf die Fixiertemperatur für das Formgedächtnis gehalten wird.

32. Verfahren zur Herstellung einer Verbundumhüllung nach Anspruch 31,
**dadurch gekennzeichnet,**
daß die Folie (SF) vor dem Reckvorgang vernetzt wird.

33. Verfahren zur Herstellung einer Verbundumhüllung nach Anspruch 31 und 32,
**dadurch gekennzeichnet,**
daß bei Verwendung einzelner Trägerelemente (TE) die zum Reckvorgang benötigte Temperatur solange gehalten wird bis die Trägerelemente (TE) strukturlos verschmolzen sind.

34. Verfahren zur Herstellung einer Verbundumhüllung nach einem der Ansprüche 1 bis 30,
**dadurch gekennzeichnet,**
daß die Verstärkungslage (V), bestehend aus den Trägerelementen (TE) und den reißfesten Fäden (RF) und gegebenenfalls den längs verlaufenden, blanken, reißfesten Fasern (ZRF) nach dem Reckvorgang auf die schrumpfende Folie (SF), vorzugsweise durch Laminieren, aufgebracht wird und daß die Schrumpftemperatur so gewählt ist, daß die Trägerelemente (TE) strukturlos im Verbund verschmelzbar sind.

35. Verfahren zur Herstellung einer Verbundumhüllung nach einem der Ansprüche 31 bis 34,
**dadurch gekennzeichnet,**
daß die Verbundumhüllung auf der Innenseite mit einer weiteren, vorzugsweise schrumpfbaren Folie ('WF) versehen wird, wobei die Verbindung zur äußeren schrumpfbaren Folie (SF) vorzugsweise durch Materialverschmelzung vorgenommen wird.

36. Verfahren zur Herstellung einer Verbundumhüllung nach einem der Ansprüche 31 bis 35,
**dadurch gekennzeichnet**,
daß die Verbundumhüllung an einer Seite mit einer Beschichtung aus Schmelzkleber (SK) versehen wird.

37. Verfahren zur Herstellung einer Verbundumhüllung nach einem der Ansprüche 31 bis 37,
**dadurch gekennzeichnet**,
daß die reißfesten Fasern (RF) so angeordnet werden, daß sie vor dem Reckvorgang und nach dem dem Schrumpfvorgang eine Überlänge aufweisen und daß beim Reckvorgang diese Überlänge zumindest teilweise aufgehoben wird.

## Claims

1. Composite cover comprising at least one heat-shrinkable film (SF) and using reinforcements of tear-resistant fibres, characterized in that a plurality of tear-resistant fibres (RF) running in the direction of shrinkage are provided, in that the tear-resistant fibres (FR) are arranged on or in a carrier element (TE, TP), assigned to the film (SF), and in that the carrier element (TE, TP) consists of a material melting below or at least at the stretching or shrinkage temperature of the shrinkable film (SF), the carrier element (TE, TP) being fused structurelessly with the tear-resistant fibres (RF) into a reinforcing ply (V) after the stretching or shrinking.

2. Composite cover according to Claim 1, characterized in that the tear-resistant fibres (RF) consist of high-temperature-resistant material, preferably of glass, ceramic, aramid, carbon material and combinations thereof.

3. Composite cover according to one of the preceding claims, characterized in that the carrier element (TE, TP) consists of noncrosslinkable polymer material, preferably of a polyamide.

4. Composite cover according to one of the preceding claims, characterized in that the melting point of the material of the carrier element (TE, TP) lies in a range from 60° to 160°C, preferably at about 100°C.

5. Composite cover according to Claim 4, characterized in that the melting point of the material of the carrier element (TE, TP) lies at least 10°C below the stretching temperature of the film (SF).

6. Composite cover according to one of the preceding claims, characterized in that the material of the carrier element (TE, TP) is of as low viscosity as possible at the stretching temperature of the film (SF), preferably below 10⁶ mPas.

7. Composite cover according to one of the preceding claims, characterized in that the volume content of the carrier element (TE, TP) is chosen to be greater than the volume content of the tear-resistant fibres (RF).

8. Composite cover according to Claim 7, characterized in that the volume content of the carrier element (TE, TP) is 2 to 100 times, preferably 4 to 20 times, that of the tear-resistant fibres (RF).

9. Composite cover according to one of the preceding claims, characterized in that the carrier element (TE, TP) consists of a hot-melt adhesive.

10. Composite cover according to one of the preceding claims, characterized in that at least one tear-resistant fibre (RF) is applied on in each case one carrier element (TE) in thread form, and a plurality of carrier elements (TE) together form a reinforcing ply (V).

11. Composite cover according to Claim 10, characterized in that a plurality of tear-resistant fibres (RF1, RF2) are applied in a crossing arrangement on the carrier element (TE).

12. Composite cover according to Claim 10 or 11, characterized in that the tear-resistant fibres (RF) are applied on a carrier element (TE) as a fabric tube.

13. Composite cover according to one of the preceding claims, characterized in that the tear-resistant fibres (RF) are at least partially stretchable.

14. Composite cover according to one of the preceding claims, characterized in that the carrier elements (TE, TP) together with the tear-resistant fibres (RF) are arranged on or in a carrier film (SF).

15. Composite cover according to one of the preceding claims, characterized in that the shrinkable film (SF) consists of crosslinked or crosslinkable polymer material, preferably of polyethylene.

16. Composite cover according to one of the preceding claims, characterized in that the shrinkable film (SF) is provided with sealing profiles (VE) along the longitudinal edges.

17. Composite cover according to one of the preceding claims, characterized in that the connection of the shrinkable film (SF) and the reinforcing ply (V) is accomplished by coextrusion.

18. Composite cover according to one of Claims 1 to 16, characterized in that the connection of the shrinkable film (SF) and the reinforcement (V) is accomplished by lamination.

19. Composite cover according to one of the preceding claims, characterized in that the tear-resistant fibres (RF) are anchored in the edge region, in particular in the region of sealing profiles (Fig. 7).

20. Composite cover according to one of the preceding claims, characterized in that additionally tear-resistant fibres (ZRF) are provided perpendicularly with respect to the direction of shrinkage.

21. Composite cover according to Claim 20, characterized in that the tear-resistant fibres (RF) form with the fibres (ZRF) running in the longitudinal direction a woven fabric, a non-woven fabric, a mat, or a lattice.

22. Composite cover according to one of the preceding claims, characterized in that the shrinkable film (SF) overhangs the reinforcements (V) at the edges (UK) running in the direction of shrinkage.

23. Composite cover according to one of the preceding claims, characterized in that on the inwardly facing side of the composite cover, comprising the shrinkable film (SF) and the reinforcing ply (V), there is arranged a further, preferably shrinkable, film (WF).

24. Composite cover according to Claim 23, characterized in that the connection of the two shrinkable films (SF, WF) is accomplished by mutual transmaterial action, preferably via the reinforcing ply (V).

25. Composite cover according to one of the preceding claims, characterized in that a layer of hot-melt adhesive (SK) is arranged on the inner side of the composite cover (VU2).

26. Composite cover according to Claims 1 to 9 or 13 to 25, characterized in that the carrier element is designed as a continuous sheet or film (TP), wherein the tear-resistant fibres (RF) are embedded.

27. Composite cover according to Claim 26, characterized in that the tear-resistant fibres (RF) are arranged in a non-rectilinearly running manner before the stretching (Figs. 12, 13).

28. Composite cover according to Claim 26, characterized in that the tear-resistant fibres are designed as short fibre pieces (RFS) not reaching over the full width of the composite cover (Fig. 14).

29. Composite cover according to one of the preceding claims, characterized in that the tear-resistant fibres (RF) have an excess length in the non-stretched state.

30. Composite cover according to one of the preceding claims, characterized by being designed as a cable sleeve.

31. Method of manufacturing a composite cover according to one of the preceding claims, characterized in that the composite cover, comprising at least the later-shrinkable film (SF) and the tear-resistant fibres (RF) arranged with excess length on or in the carrier elements (TE, TP), is heated to a temperature required for the stretching operation, in that then in this state the stretching is performed and in that the composite cover (VU1, VU2) is kept in this stretched state subsequently until cooling to the fixing temperature for the shape memory.

32. Method of manufacturing a composite cover according to Claim 31, characterized in that the film (SF) is crosslinked before the stretching operation.

33. Method of manufacturing a composite cover according to Claims 31 and 32, characterized in that, when individual carrier elements (TE) are used, the temperature required for the stretching operation is maintained until the carrier-elements (TE) are structurelessly fused.

34. Method of manufacturing a composite cover according to one of Claims 1 to 30, characterized in that the reinforcing ply (V), comprising the carrier elements (TE) and the tear-resistant fibres (RF) and, if appropriate, the longitudinally running, bare, tear-resistant fibres (ZRF), is applied after the stretching operation to the shrinking film (SF), preferably by lamination, and in that the shrinkage temperature is chosen such that the carrier elements (TE) can fuse structurelessly in the composite.

35. Method of manufacturing a composite cover according to one of Claims 31 to 34, characterized in that the composite cover is provided on the inner side with a further, preferably shrinkable, film ('WF), the connection with the outer shrinkable film (SF) preferably being accomplished by material fusion.

36. Method for manufacturing a composite cover according to one of Claims 31 to 35, characterized in that the composite cover is provided on one side with a coating of hot-melt adhesive (SK).

37. Method of manufacturing a composite cover according to one of Claims 31 to 36, characterized in that the tear-resistant fibres (RF) are arranged such that they have an excess length before the stretching operation and after the shrinking operation and in that this excess length is at least partially eliminated during the stretching operation.

## Revendications

1. Enveloppe composite formée d'au moins une feuille thermorétractable (SF), avec utilisation de renforts constitués par des fibres résistantes à la déchirure, caractérisée par le fait
qu'il est prévu plusieurs fibres résistantes à la déchirure, qui s'étendent approximativement dans la direction de rétraction,
que les fibres (RF) résistantes à la déchirure sont disposées sur ou dans un élément de support (TE,TP) associé à la feuille (SF), et que l'élément de support (TE,TP) est réalisé en un matériau qui fond au-dessous de ou au moins à la température d'étirage ou de contraction de la feuille rétractable (SF), l'élément de support (TE,TP) étant réuni par fusion d'une manière non structurée, après l'étirage ou la contraction, aux fibres (FR) résistantes à la déchirure, pour former une couche de renfort (V).

2. Enveloppe composite suivant la revendication 1, caractérisée par le fait que les fibres (RF) résistantes à la déchirure sont réalisées en un matériau résistant aux températures élevées, de préférence du verre, une céramique, de l'aramide, un matériau à base de carbone ainsi que des combinaisons de ces substances.

3. Enveloppe composite suivant l'une des revendications précédentes, caractérisée par le fait que l'élément de support (TE,TP) est réalisé en une matière plastique non réticulable, de préférence un polyamide.

4. Enveloppe composite suivant l'une des revendications précédentes, caractérisée par le fait que le point de fusion des matériaux de l'élément de support (TE,TP) se situe dans une gamme de 60° à 160°C et est égal de préférence à environ 100°C.

5. Enveloppe composite suivant la revendication 4, caractérisée par le fait que le point de fusion du matériau de l'élément de support (TE,TP) est inférieur, d'au moins 10°C, à la température d'étirage de la feuille (SF).

6. Enveloppe composite suivant l'une des revendications précédentes, caractérisée par le fait que le matériau de l'élément de support (TE,TP) possède une viscosité aussi faible que possible à la température d'étirage de la feuille (SF), et sa viscosité est de préférence inférieure à 10⁶ mPas.

7. Enveloppe composite suivant l'une des revendications précédentes, caractérisée par le fait que le pourcentage en volume de l'élément de support (TE,TP) est choisi supérieur au pourcentage en volume des fibres (RF) résistantes à la déchirure.

8. Enveloppe composite suivant la revendication 7, caractérisée par le fait que le pourcentage en volume de l'élément de support (TE,TP) est compris entre 2 et 100 fois et de préférence entre 4 et 20 fois le pourcentage en volume des fibres (RF) résistantes à la déchirure.

9. Enveloppe composite suivant l'une des revendications précédentes, caractérisée par le fait que l'élément de support (TE,TP) est formé par une colle fusible.

10. Enveloppe composite suivant l'une des revendications précédentes, caractérisée par le fait qu'au moins une fibre (RF) résistante à la déchirure est disposée respectivement sur un élément de support en forme de filtre (TE) et que plusieurs éléments de support (TE) forment conjointement une couche de renfort (V).

11. Enveloppe composite suivant la revendication 10, caractérisée par le fait que plusieurs fibres (RF1,RF2) résistantes à la déchirure sont disposées d'une manière croisée sur l'élément de support (TE).

12. Enveloppe composite suivant la revendication 10 ou 11, caractérisée par le fait que les fibres (RF) résistantes à la déchirure sont disposées sous la forme d'un manchon de tissu sur un élément de support (TE).

13. Enveloppe composite suivant l'une des revendications précédentes, caractérisée par le fait que les fibres (RF) résistantes à la déchirure peuvent être au moins partiellement étirées.

14. Enveloppe composite suivant l'une des revendications précédentes, caractérisée par le fait que les éléments de support (TE,TP) ainsi que les fibres (RF) résistantes à la déchirure sont disposées sur ou dans une feuille de support (SF).

15. Enveloppe composite suivant l'une des revendications précédentes, caractérisée par le fait que la feuille rétractable (SF) est constituée par une matière plastique réticulée ou réticulable, de préférence du polyéthylène.

16. Enveloppe composite suivant l'une des revendications précédentes, caractérisée par le fait que la feuille rétractable (SF) comporte, le long de ses bords longitudinaux, des profils de fermeture (VE).

17. Enveloppe composite suivant l'une des revendications précédentes, caractérisée par le fait que la liaison entre la feuille rétractable (SF) et la couche de renfort (V) est réalisée par extrusion.

18. Enveloppe composite suivant l'une des revendications 1 à 16, caractérisée par le fait que la liaison entre la feuille rétractable (SF) et le renfort (V) est obtenue par laminage.

19. Enveloppe composite suivant l'une des revendications précédentes, caractérisée par le fait que les fibres (RF) résistantes à la déchirure sont ancrées dans la zone marginale, notamment dans la zone de profils de fermeture (figure 7).

20. Enveloppe composite suivant l'une des revendications précédentes, caractérisée par le fait qu'il est prévu, en supplément, des fibres (ZRF) résistantes à la déchirure, perpendiculaires à la direction de contraction.

21. Enveloppe composite suivant la revendication 20, caractérisé par le fait que les fibres (RF) résistantes à la déchirure forment, avec les fibres (ZRF) qui s'étendent dans la direction longitudinale, un tissu, un treillis, un mat ou une grille.

22. Enveloppe composite suivant l'une des revendications précédentes, caractérisée par le fait que la feuille rétractable (SF) fait saillie par-dessus les renforts (V), au niveau des bords (UK) qui s'étendent dans la direction de contraction.

23. Enveloppe composite suivant l'une des revendications précédentes, caractérisée par le fait qu'une autre feuille (WF), de préférence rétractable, est disposée sur la face, tournée vers l'intérieur, de l'enveloppe composite, qui est constituée par une feuille rétractable (SF) et la couche de renfort (V).

24. Enveloppe composite suivant la revendication 23, caractérisée par le fait que la liaison des deux feuilles rétractables (SF,WF) s'effectue au moyen d'une interpénétration réciproque des matériaux de préférence par l'intermédiaire de la couche de renfort (V).

25. Enveloppe composite suivant l'une des revendications précédentes, caractérisée par le fait qu'une couche de colle fusible (SK) est disposée sur la face intérieure de l'enveloppe composite (VU2).

26. Enveloppe composite suivant la revendication 1 ou 9 ou 3 à 25, caractérisée par le fait que l'élément de support est agencé sous la forme d'une plaque ou d'une feuille continue (CP), dans laquelle sont insérées les fibres (RF) résistantes à la déchirure.

27. Enveloppe composite suivant la revendication 26, caractérisée par le fait que les fibres (RF) résistantes à la déchirure ne sont pas disposées selon une disposition rectiligne avant l'étirage (figures 12, 13).

28. Enveloppe composite suivant la revendication 26, caractérisée par le fait que les fibres résistantes à la déchirure sont agencées sous la forme de courts morceaux de fibres (RFS) qui ne s'étendent pas sur toute la largeur de l'enveloppe composite (figure 14).

29. Enveloppe composite suivant l'une des revendications précédentes, caractérisée par le fait que les fibres (RF) résistantes à la déchirure possèdent, à l'état non étiré, une surlongueur.

30. Enveloppe composite suivant l'une des revendications précédentes, caractérisée par sa réalisation sous la forme d'un manchon de câble.

31. Procédé pour fabriquer une enveloppe composite suivant l'une des revendications précédentes, caractérisé par le fait qu'on chauffe l'enveloppe composite constituée au moins par la feuille (SF), qui sera rétractable ultérieurement, et les fibres (RF) résistantes à la déchirure, qui sont disposées sur ou dans les éléments de support (TE,TP) avec une surlongueur, à une température nécessaire pour l'opération d'étirage, qu'on exécute ensuite l'étirage, dans cet état, et qu'on maintient ensuite l'enveloppe composite (VU1,VU2) dans cet état étiré, jusqu'au refroidissement à la température de fixage pour la mémoire de forme.

32. Procédé pour fabriquer une enveloppe composite suivant la revendication 31, caractérisé par le fait qu'on réticule la feuille (SF) avant l'opération d'étirage.

33. Procédé pour fabriquer une enveloppe composite suivant les revendications 31 et 32, caractérisé par le fait que, dans le cas de l'utilisation d'éléments de support (TE) individuels, on maintient la température nécessaire pour l'opération d'étirage jusqu'à ce que les éléments de support (TE) soient réunis par fusion d'une manière non structurée.

34. Procédé pour fabriquer une enveloppe composite suivant l'une des revendications 1 à 30, caractérisé par le fait qu'on dépose la couche de renfort (V), constituée par les éléments de support (TE) et les fibres (RF) résistantes à la déchirure et éventuellement une fibre nue (ZRF), qui résistent à la déchirure et sont disposées de préférence par laminage longitudinalement, après l'opération d'étirage, sur la feuille rétractable (SF), et qu'on choisit la température de rétraction de manière que les éléments de support (TE) puissent être réunis par fusion d'une manière non structurée dans l'enveloppe composite.

35. Procédé pour fabriquer une enveloppe composite suivant l'une des revendications 31 à 34, caractérisé par le fait qu'on applique sur la face intérieure de l'enveloppe composite une autre feuille, de préférence rétractable ('WF), la liaison avec la feuille rétractable extérieure (SF) étant réalisée de préférence par réunion par fusion des matériaux.

36. Procédé pour fabriquer une enveloppe composite suivant l'une des revendications 31 à 35, caractérisé par le fait qu'on applique sur une face de l'enveloppe composite un revêtement formé d'une colle fusible (SK).

37. Procédé pour fabriquer une enveloppe composite suivant l'une des revendications 31 à 37, caractérisé par le fait qu'on dispose les fibres (RF) résistantes à la déchirure de manière qu'après l'opération d'étirage et après l'opération de rétraction elles possèdent une surlongueur et que lors de l'opération d'étirage, cette surlongueur est supprimée au moins en partie.
